(19) Europäisches Patentamt / European Patent Office / Office européen des brevets

(11) **EP 4 407 300 B1**

(12) **FASCICULE DE BREVET EUROPEEN**

(45) Date de publication et mention de la délivrance du brevet:
**22.04.2026 Bulletin 2026/17**

(51) Classification Internationale des Brevets (IPC):
**G01N 21/3504** *(2014.01)* **G01N 21/61** *(2006.01)*
**G01N 21/03** *(2006.01)*

(21) Numéro de dépôt: **24152276.2**

(22) Date de dépôt: **17.01.2024**

(52) Classification Coopérative des Brevets (CPC):
**G01N 21/031; G01N 21/3504;** G01N 21/61

(54) **CAPTEUR DE GAZ COMPACT DE CONCEPTION SIMPLE**

KOMPAKTER GASSENSOR MIT EINFACHEM DESIGN

COMPACT GAS SENSOR OF SIMPLE DESIGN

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **24.01.2023 FR 2300623**

(43) Date de publication de la demande:
**31.07.2024 Bulletin 2024/31**

(73) Titulaire: **Elichens**
**38040 Grenoble (FR)**

(72) Inventeur: **DUPREZ, Hélène**
**38040 Grenoble (FR)**

(74) Mandataire: **INNOV-GROUP**
**209 Avenue Berthelot**
**69007 Lyon (FR)**

(56) Documents cités:
**FR-A1- 3 022 999 FR-A1- 3 095 517**
**US-A1- 2022 128 449**

**Description**

**DOMAINE TECHNIQUE**

Le domaine technique de l'invention est un capteur optique de gaz, et plus particulièrement un capteur infrarouge non dispersif.

**ART ANTERIEUR**

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans de nombreux documents, par exemple dans US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse, émise par la source, transmise à travers le gaz à analyser, et partiellement absorbée par ce dernier. Les procédés comprennent généralement une mesure d'une onde lumineuse, dite onde lumineuse de référence, émise par la source, et non absorbée par le gaz analysé.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière le photodétecteur de référence étant associé à un filtre optique de référence. Le filtre optique de référence définit une bande spectrale de référence, dans laquelle le gaz à analyser ne présente pas d'absorption significative.

Les documents EP2711687 et EP2891876 décrivent des capteurs de gaz comportant des enceintes, dans lesquelles un ou plusieurs miroirs sont agencés. Les miroirs permettent de maximiser le trajet de la lumière dans l'enceinte, et de focaliser les rayons lumineux ayant traversé le gaz sur le ou les photodétecteurs. Cela permet d'augmenter la sensibilité de détection tout en utilisant des dispositifs compacts.

FR 3 022 999 A1 divulgue un capteur de gaz comportant une enceinte avec une première série de miroirs et une deuxième série de miroirs qui sont agencés l'une par rapport à l'autre de sorte que le rayonnement émis par la source de lumière soit réfléchi alternativement par un miroir de la deuxième série et par un miroir de la première série et définisse un trajet optique allant de la source de lumière au photodétecteur

US2022/0214267 décrit une configuration compacte d'un capteur de gaz, compatible avec un format dit « 4R », qui est un standard usuel dans le domaine de la détection de gaz.

Le demandeur a conçu un capteur de gaz particulièrement compact, compatible avec le format 4R, dont la fabrication est plus simple, et moins couteuse que celle du capteur décrit dans US2022/0214267. Il en résulte un capteur de gaz aux performances optimisées, privilégiant notamment la compacité et le coût.

**EXPOSE DE L'INVENTION**

Un premier objet de l'invention est un capteur de gaz comportant une enceinte, configurée pour recevoir un gaz, le capteur comportant également :

- une source de lumière, configurée pour émettre une onde lumineuse se propageant dans l'enceinte en formant, à partir de la source de lumière, un premier cône de lumière;
- un photodétecteur de mesure configuré pour détecter une onde lumineuse émise par la source de lumière et s'étant propagé à travers l'enceinte;
- la source de lumière et le photodétecteur de mesure étant supportés par un circuit imprimé;

    - une surface réfléchissante de rang 1, formant une partie d'une ellipsoïde de révolution, présentant un premier foyer et un deuxième foyer, la surface réfléchissante de rang 1 étant disposée face à la source de lumière, de façon à réfléchir le premier cône de lumière vers le deuxième foyer, la première surface réfléchissante formant une partie d'une ellipsoïde de révolution ;
- le dispositif étant caractérisé en ce que :

- le circuit imprimé comporte un miroir plan, formant une surface réfléchissante de rang 2, le deuxième foyer de la surface réfléchissante de rang 1 étant situé sur le miroir plan ou à une distance inférieure à 1 mm de ce dernier;
- le dispositif comporte une dernière surface réfléchissante, de rang $N$, $N$ étant supérieur ou égal à 3, comportant un premier foyer, situé au niveau d'un miroir plan, disposé sur le circuit imprimé, formant une surface réfléchissante de rang $N$-1, la dernière surface réfléchissante comportant un deuxième foyer;

de telle sorte que l'onde lumineuse émise par la source de lumière est successivement réfléchie par les $N$ surfaces réfléchissantes, selon leurs rangs respectifs, avant de converger vers le deuxième foyer de la dernière surface réfléchissante, en formant un dernier cône de lumière, le photodétecteur de mesure étant disposé de manière à s'étendre dans le dernier cône de lumière.

Selon une possibilité, la source de lumière est disposée au niveau du premier foyer de la surface réfléchissante de rang 1, ou à une distance inférieure à 1 mm de ce dernier.

Selon une possibilité, le photodétecteur de mesure est disposé au niveau du deuxième foyer de la dernière surface réfléchissante, ou à une distance inférieure à 1 mm de ce dernier.

Selon une possibilité:

- le dispositif comporte plusieurs surfaces réfléchissantes de rang pair, chaque surface réfléchissante de rang pair étant un miroir plan disposé sur le circuit imprimé ;
- le dispositif comporte plusieurs surfaces réfléchissantes de rang impair, chaque surface réfléchissante de rang pair formant une partie d'une ellipsoïde de révolution et s'étendant face au circuit imprimé.

Selon une possibilité:

- chaque surface réfléchissante de rang $n$ est configurée pour réfléchir l'onde lumineuse qu'elle reçoit en formant un cône de lumière de rang $n$+1, ce dernier s'étendant autour d'un axe de propagation de rang $n$ +1 ;
- lorsque $n$<$N$, l'axe de propagation de rang $n$+1 s'étend entre la surface réfléchissante de rang $n$ jusqu'à la surface réfléchissante de rang $n$+1 ;
- lorsque $n$ est impair, et $n \leq N$-2, chaque surface réfléchissante s'étend selon une partie d'une ellipsoïde de révolution, l'axe de propagation de rang $n$+1 passant par le deuxième foyer de la surface de rang $n$, ce dernier étant confondu avec le premier foyer de la surface de rang $n$ +2 ;
- lorsque $n$ = $N$, l'axe de propagation de rang $N$+1 s'étend entre la surface de rang $N$ jusqu'au photodétecteur de mesure;

de telle sorte que l'onde lumineuse émise par la source de lumière subit un nombre de réflexions correspondant au nombre de surfaces réfléchissantes avant d'atteindre le photodétecteur de mesure.

Selon une possibilité, dans lequel lorsque $n$<$N$ et $n$ est impair, chaque cône de lumière de rang $n$+1 converge vers le deuxième foyer de la surface de rang $n$ à partir de laquelle il se propage. Les surfaces réfléchissantes de rang impair peuvent être ménagées sur une face interne d'une même paroi, formant un capot du capteur. L'enceinte peut être formée par l'assemblage du capot du capteur en dessus d'un socle, le circuit imprimé étant disposé sur le socle.

Le ou chaque miroir plan peut être formé par une couche mince d'un matériau réfléchissant déposée sur le circuit imprimé.

Le nombre de surfaces réfléchissantes s'étendant entre la source de lumière et le photodétecteur de mesure est de préférence impair. Le nombre de surfaces réfléchissantes s'étendant entre la source de lumière et le photodétecteur de mesure peut être égal à 3 ou à 5. Selon une possibilité, le capteur comporte un photodétecteur de référence, configuré pour détecter une onde lumineuse considérée comme non atténuée par le gaz.

Le capteur peut comporter une surface réfléchissante de référence, formant une ellipsoïde de révolution, la surface de référence comportant :

- un premier foyer, disposé au niveau d'une surface réfléchissante plane, de rang pair, ou à une distance inférieure à 1 mm de cette dernière ;
- un deuxième foyer, disposé au niveau du photodétecteur de référence, ou à une distance inférieure à 1 mm de ce dernier.

Un deuxième objet de l'invention est un procédé d'analyse d'un gaz à l'aide d'un capteur selon le premier objet de l'invention, le procédé comportant les étapes suivantes :

a) introduction du gaz dans l'enceinte du capteur;
b) illumination du gaz à l'aide de la source de lumière;
c) mesure d'une intensité lumineuse d'une onde lumineuse, émise par la source de lumière, et s'étant propagée à travers l'enceinte par le photodétecteur de mesure;
d) détermination d'une quantité d'une espèce gazeuse dans le gaz, à partir de l'intensité lumineuse mesurée.

L'étape d) peut être mise en œuvre par une unité de traitement à partir d'un signal généré par le photodétecteur de mesure.

Le procédé peut comporter une détection, par un photodétecteur de référence, d'une onde lumineuse de référence, considérée comme non absorbée, ou de façon négligeable, par le gaz. L'étape d) est alors mise en œuvre par l'unité de traitement à partir d'un signal de référence généré par le photodétecteur de référence.

L'invention sera mieux comprise à la lecture de l'exposé des exemples de réalisation présentés, dans la suite de la description, en lien avec les figures listées ci-dessous.

## FIGURES

Les figures 1A et 1B sont des coupes du capteur de gaz, respectivement dans un plan transversal XZ et dans un plan principal XY, le plan principal étant perpendiculaire au plan transversal.

La figure 2A schématise le socle et le capot du capteur et montre l'emplacement des principaux composants du capteur, c'est-à-dire une source de lumière, un photodétecteur de mesure, ainsi que trois surfaces réfléchissantes. Sur cette figure, l'axe $D_1$ correspond à une génératrice circulaire représentée sur la figure 1B. Cette représentation revient à dérouler l'enceinte du capteur selon cette génératrice.

La figure 2B représente une variante du mode de réalisation schématisé sur la figure 2A, mettant en œuvre un photodétecteur de référence.

La figure 3A montre un mode de réalisation mettant en œuvre 5 surfaces réfléchissantes successives.

La figure 3B représente une variante du mode de réalisation schématisé sur la figure 3A, mettant en œuvre un photodétecteur de référence.

La figure 4 montre un banc d'essai expérimental visant à déterminer la réflectivité de différentes couches minces.

## EXPOSE DE MODES DE REALISATION PARTICULIERS

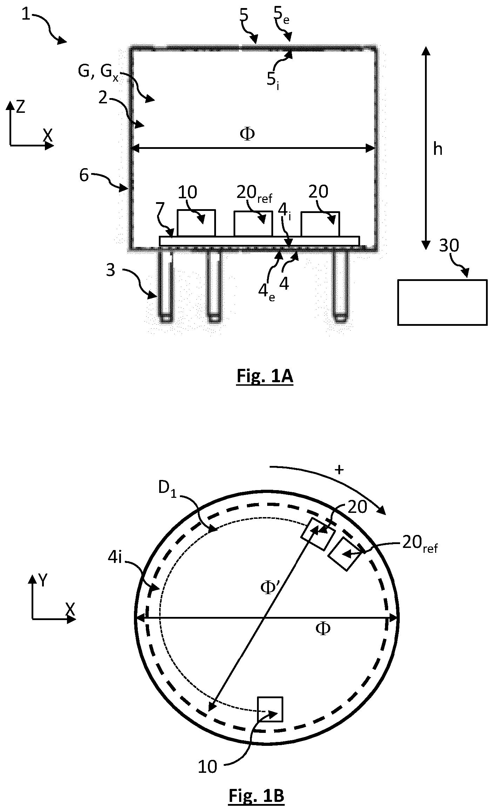

Les figures 1A et 1B schématisent un capteur de gaz 1 selon l'invention. Le capteur de gaz 1 comporte une enceinte 2 délimitée par un socle 4, un capot 5 et une paroi transversale 6. La paroi transversale 6 s'étend parallèlement à un axe transversal Z. La paroi transversale 6 est une paroi annulaire, autour de l'axe transversal Z. Elle s'étend entre le socle 4 et le capot 5. L'axe transversal Z s'étend perpendiculairement à un plan principal XY. L'enceinte 2 forme un boîtier cylindrique, obtenu en disposant le capot 5 sur le socle 4.

Le socle 4 comporte une face externe $4_e$ et une face interne $4_i$. Le capot 5 comporte une face externe $5_e$ et une face interne $5_i$. Les faces externes $4_e$, $5_e$ respectives du socle 4 et du capot 5 sont planes, parallèlement au plan principal XY. Elles sont perpendiculaires à l'axe transversal Z autour duquel s'étend la paroi annulaire 6. Les faces internes $4_i$, $5_i$ respectives du socle 4 et du capot 5 sont orientées vers l'intérieur de l'enceinte 2. L'enceinte 2 est reliée à des broches de connexion 3, parallèles à l'axe transversal Z.

La forme et les dimensions du capteur 1 sont conformes à un format usuel dans le domaine de la détection de gaz, dit format 4R. Le diamètre $\Phi$ de l'enceinte 2, dans le plan XY, est de 20 mm, et sa hauteur h (selon l'axe Z) est de 16.6 mm. Compte tenu de l'épaisseur de la paroi transversale 6, le diamètre interne $\Phi'$ de l'enceinte 2 est de 17 mm. On définit un sens positif de rotation autour de l'axe transversal Z, qui est considéré arbitrairement comme similaire au sens de rotation des aiguilles d'une montre.

Un avantage du format 4R est qu'il est largement utilisé dans le domaine de l'électronique. Ainsi, un capteur de gaz 1 respectant ce format peut aisément être raccordé à des circuits électroniques existants. Le respect de ce format facilite la maintenance de systèmes de mesure, en facilitant le remplacement de capteurs.

L'enceinte 2 est destinée à être occupée par un gaz $G$ à analyser. Le gaz à analyser comporte une espèce gazeuse $G_x$ dont on souhaite déterminer une concentration $C_x$ dans le gaz. L'espèce gazeuse $G_x$ absorbe la lumière, et notamment la lumière infra-rouge, dans une bande spectrale d'absorption $\Delta\lambda_x$. Le capteur 1 comporte également :

■ une source de lumière 10, configurée pour émettre une onde lumineuse 11 dans une bande spectrale d'émission $\Delta\lambda$. La bande spectrale d'émission peut s'étendre entre le proche ultra-violet et l'infra-rouge moyen, par exemple entre 200 nm et 20 $\mu$m, et le plus souvent dans l'infra-rouge, la bande spectrale d'émission $\Delta\lambda$ étant par exemple comprise entre 1 $\mu$m et 20 $\mu$m.

■ un photodétecteur de mesure 20, configuré pour détecter une onde lumineuse 14, dite onde lumineuse transmise, dans la bande spectrale d'absorption $\Delta\lambda_x$. L'onde lumineuse transmise est une onde lumineuse émise par la source de lumière 10, et s'étant propagée à travers l'enceinte, en s'atténuant progressivement durant son parcours à travers le gaz. Le photodétecteur de mesure 20 peut être associé à un filtre passe-bande, définissant une bande spectrale de détection $\Delta\lambda_d$ comprise dans la bande spectrale d'absorption $\Delta\lambda_x$.

■ un photodétecteur de référence 20$_{ref}$, configuré pour détecter une onde lumineuse de référence. L'onde lumineuse de référence détectée par le photodétecteur de référence 20$_{ref}$ est considérée comme non atténuée par le gaz $G$ présent dans l'enceinte. Dans cet exemple, le photodétecteur de référence détecte l'onde lumineuse de référence 20$_{ref}$ dans une bande spectrale de référence $\Delta\lambda_{ref}$, dans laquelle l'atténuation de l'onde lumineuse émise par la source est considérée comme négligeable, ou due à une variation de conditions environnementales, par exemple la température, ou l'humidité. Le photodétecteur de référence peut être associé à un filtre passe-bande de référence, définissant la bande spectrale de référence $\Delta\lambda_{ref}$. Par exemple, la bande spectrale de référence $\Delta\lambda_{ref}$ est centrée autour de la longueur d'onde 3.91 $\mu$m. Le recours à un photodétecteur de référence est optionnel mais est avantageux. De façon alternative, le photodétecteur de référence n'est pas disposé dans l'enceinte 2 comportant le gaz, auquel cas la bande spectrale de référence peut être similaire à la bande spectrale de mesure.

De préférence, la source de lumière 10, le photodétecteur de mesure 20 et le photodétecteur de référence 20$_{ref}$ sont reliés à un même support plan. Il peut notamment s'agir d'une carte électronique formant la première paroi 4 de l'enceinte 2. Une telle disposition simplifie la fabrication du capteur.

La source de lumière 10 peut être impulsionnelle, et émettre des impulsions lumineuses dont la durée est généralement comprise entre 50 ms et 1 s. Il peut notamment s'agir d'une source de lumière infra-rouge de type filament formé sur une membrane suspendue, le filament étant parcouru par un courant électrique. De cette façon, la membrane suspendue est chauffée à une température comprise entre 400°C et 800°C, de façon à émettre une lumière infra-rouge.

Le photodétecteur de mesure 20 et le photodétecteur de référence 20$_{ref}$ peuvent être des thermopiles ou des pyrodétecteurs ou des photodiodes. Chaque photodétecteur est configuré pour générer un signal de détection, dont l'amplitude A correspond à une intensité I de l'onde lumineuse détectée.

L'intensité $I$ de l'onde lumineuse détectée par le photodétecteur de mesure 20 dépend de la concentration $C_x$ de l'espèce gazeuse d'intérêt $G_x$ selon la relation de Beer Lambert :

$$att = \frac{I}{I_0} = e^{-\mu(C_x)l} \quad (1)$$

où :

- $\mu(C_x)$ est un coefficient atténuation, dépendant de la concentration $C_x$ recherchée;
- $l$ est l'épaisseur de gaz traversé par l'onde lumineuse dans l'enceinte ;
- $I_0$ correspond à l'intensité de l'onde qui est ou serait détectée par le photodétecteur de mesure 20 en l'absence de gaz absorbant dans l'enceinte.

La comparaison entre $I$ et $I_0$, prenant la forme d'un ratio $I/I_0$, correspond à une atténuation *att* causée par l'espèce gazeuse $G_x$ considérée. Lors de chaque impulsion de la source de lumière 10, on peut ainsi déterminer $\mu(C_x)$, ce qui permet d'estimer la quantité $C_x$ sachant que la relation entre $C_x$ et $\mu(C_x)$ est connue.

L'intensité $I_0$ peut être prédéterminée, par exemple au cours d'une calibration, ou mesurée en l'absence de gaz dans l'enceinte 20. Lorsque le capteur comporte un photodétecteur de référence 20$_{ref}$, l'intensité de référence $I_{ref}$ mesurée par le photodétecteur de référence permet de mesurer des variations de $I_0$.

Le capteur comporte une unité de traitement 30, recevant les signaux mesurés respectivement par le photodétecteur de mesure 20 et l'éventuel photodétecteur de référence 20$_{ref}$. L'unité de traitement 30 permet d'effectuer, à partir de ces derniers, les calculs d'estimation de la concentration de l'espèce gazeuse recherchée. L'unité de traitement 30 comporte par exemple un microprocesseur.

Les dimensions de l'enceinte 2 dans laquelle s'étend le gaz sont particulièrement réduites. Or, il est préférable que l'onde lumineuse détectée par le photodétecteur de mesure 20 soit suffisamment atténuée de façon que l'atténuation *att* soit plus aisément quantifiable, en tenant compte des différents bruits de la chaîne de mesure. Il est donc préférable que la longueur *l* parcourue par les rayons atteignant le photodétecteur de mesure soit suffisamment élevée. Le demandeur considère que l'atténuation *att* est de préférence supérieure à 0.2.

Dans la demande US2022/0214267, on décrit une configuration particulièrement compacte d'un capteur de gaz, dans lequel les rayons sont réfléchis par des surfaces réfléchissantes ellipsoïdales. Par surface ellipsoïdale, on entend une surface suivant une partie d'une ellipsoïde de révolution. Les surfaces réfléchissantes permettent à l'onde émise par la source de lumière d'effectuer de multiples réflexions avant d'atteindre le photodétecteur de mesure. Il en résulte une longueur suffisante *l* parcourue, dans l'enceinte 2, par les rayons atteignant le photodétecteur de mesure 20. Cependant, une telle configuration suppose la réalisation d'un grand nombre de surface ellipsoïdales, qui doivent être précisément agencées les unes par rapport aux autres. De plus, cela suppose la réalisation de deux pièces différentes présentant des formes complexes.

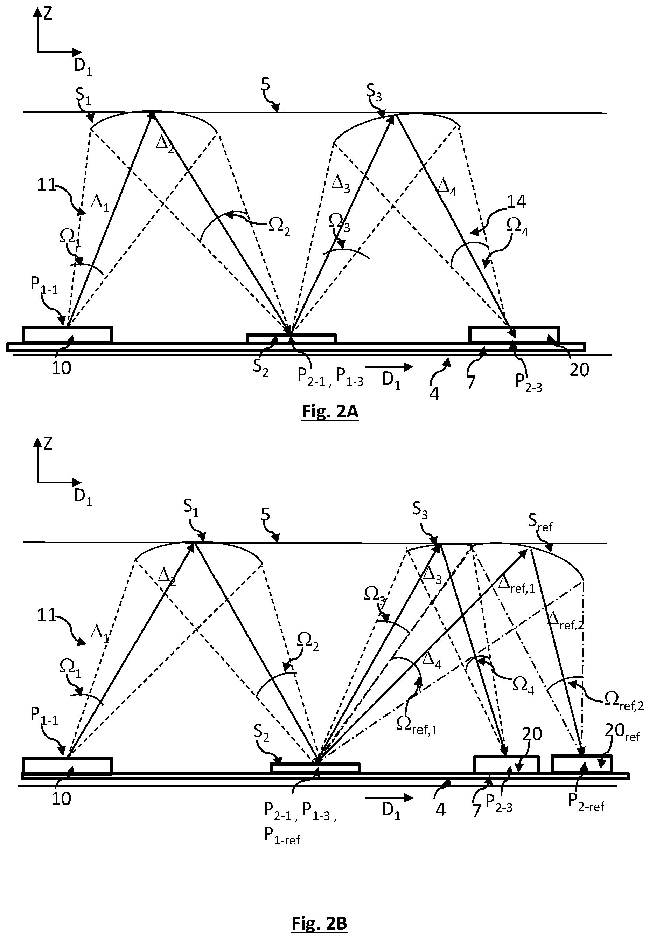

La figure 2A schématise l'intérieur de l'enceinte 2. Sur la figure 2A, on a représenté l'intérieur de l'enceinte 2 en suivant une génératrice circulaire $D_1$ représentée en pointillés sur la figure 1B. Cette représentation revient à dérouler l'enceinte selon la génératrice circulaire $D_1$, le long de laquelle s'étendent des surfaces réfléchissantes $S_n$ de rang *n*. L'indice *n* est un entier naturel tel que $1 \leq n \leq N$, *N* étant le nombre de surfaces réfléchissantes situées sur le chemin optique de l'onde lumineuse émise par la source de lumière 10 et se propageant vers le photodétecteur de mesure 20.

Dans ce dispositif, selon que *n* soit pair ou impair, la surface réfléchissante $S_n$ de rang *n* est respectivement plane ou ellipsoïdale. Ainsi, le capteur est formé d'une alternance de surfaces réfléchissantes ellipsoïdales (rang *n* impair) ou planes (*n* pair). Le recours à des surfaces réfléchissantes planes simplifie la fabrication du capteur.

Le terme surface ellipsoïdale $S_n$ désigne une surface ellipsoïdale de révolution, obtenue par une rotation dans l'espace d'une ellipse $E_n$ autour de l'un de ses axes. Dans l'exemple décrit, chaque surface ellipsoïdale $S_n$, *n* étant impair, est associée à une ellipse $E_n$ présentant un grand axe et un petit axe. Par surface ellipsoïdale associée à une ellipse, on entend une surface ellipsoïdale formée par une rotation de l'ellipse autour d'un de ses axes. Dans l'exemple représenté, chaque surface ellipsoïdale $S_n$ est obtenue par une rotation de ellipse $E_n$, à laquelle elle est associée, autour de son grand axe. Une telle surface ellipsoïdale est dite allongée, ce qui correspond à la désignation anglosaxonne "prolate spheroid" ou "prolate ellipsoid".

Par surface réfléchissante, on entend une surface dont le coefficient de réflexion, dans tout ou partie de la bande spectrale d'émission $\Delta\lambda$, est supérieur à 40%, voire 50%, et de préférence supérieur à 80%. Dans le domaine spectral infra-rouge, une paroi réfléchissante peut être formée à l'aide d'un matériau réfléchissant tel un métal, par exemple de l'or.

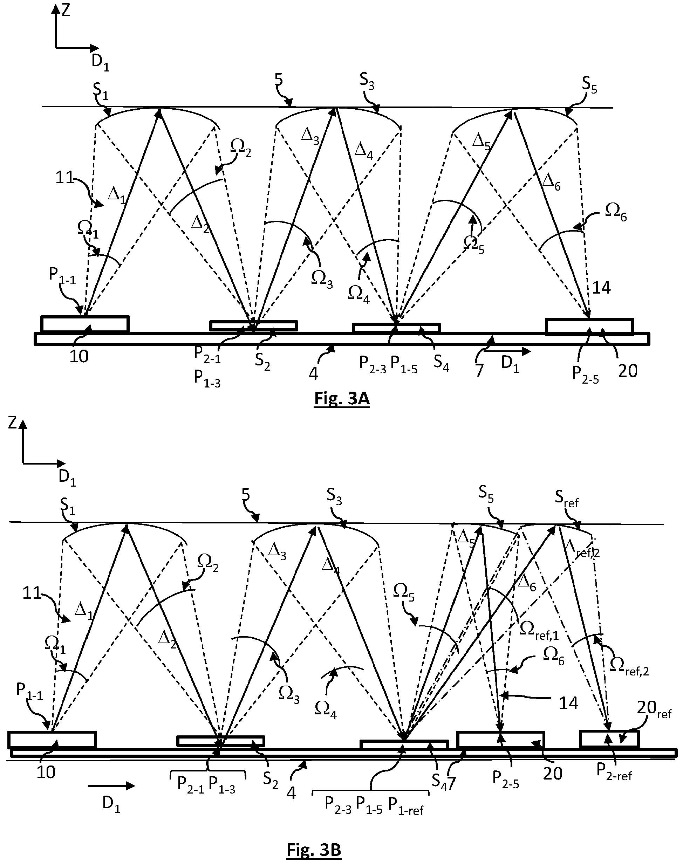

Dans les configurations représentées sur les figures 2A et 2B, $N = 3$. Dans les configurations représentées sur les figures 3A et 3B, $N = 5$. *N* peut être compris entre 3 et 10, mais le demandeur considère que $N = 5$ correspond à un optimum.

Quelle que soit la configuration, chaque surface réfléchissante $S_n$, *n* étant impair, est ellipsoïdale. Elle comporte un premier foyer $P_{1-n}$ et un deuxième foyer $P_{2-n}$, les deux foyers étant distincts l'un de l'autre. Lorsque $3 \leq n < N$, le premier foyer $P_{1-n}$ est confondu avec le deuxième foyer $P_{2-(n-2)}$ d'une surface réfléchissante ellipsoïdale $S_{n-2}$ de rang n-2. Lorsque $n = 1$ (première surface réfléchissante $S_1$), le deuxième foyer $P_{2-1}$ est confondu avec le premier foyer $P_{1-3}$ de la deuxième surface réfléchissante $S_3$. Lorsque $n = N$ (dernière surface), le premier foyer $P_{1-N}$ est confondu avec le deuxième foyer $P_{2-(N-2)}$ de la surface ellipsoïdale $S_{N-2}$ de rang N-2. La première surface réfléchissante $S_1$ permet une réflexion de l'onde lumineuse incidente 11 émise par la source de lumière 10, tandis que la dernière surface réfléchissante $S_N$ permet une réflexion de l'onde lumineuse, ayant traversé l'enceinte 10, vers le photodétecteur de mesure 20.

Chaque surface réfléchissante $S_n$, *n* étant pair, est un miroir plan. Chaque surface réfléchissante $S_n$, *n* étant pair, est située au niveau :

- du deuxième foyer $P_{2,n-1}$ de la surface réfléchissante ellipsoïdale $S_{n-1}$ de rang immédiatement inférieur ;
- du premier foyer $P_{1,n+1}$ de la surface réfléchissante ellipsoïdale de rang immédiatement supérieur $S_{n+1}$.

La source de lumière 10 et le photodétecteur de mesure 20 sont portés par un circuit imprimé 7, le circuit imprimé étant désigné par le terme anglosaxon Printed Circuit Board (PCB). De préférence, la source de lumière et le photodétecteur de mesure sont portés par le même circuit imprimé. De préférence, chaque miroir plan, formant une surface réfléchissante $S_n$ de rang pair, est formé par une couche mince d'un matériau réfléchissant, tel de l'or ou du nickel, directement sur le PCB. L'épaisseur de la couche mince peut être de quelques 100 nanomètres, par exemple comprise entre 50 nm et 1 $\mu$m, ou entre 300 nm et 1 $\mu$m. Ainsi, avantageusement, chaque miroir résulte d'un dépôt du matériau réfléchissant directement sur le PCB. Cela simplifie le processus de fabrication du détecteur. La couche mince plane est disposée de façon à se situer dans l'axe $\Delta_{n-1}$ du cône de lumière $\Omega_{n-1}$ émis par la surface réfléchissante ellipsoïdale $S_{n-1}$ de rang précédent. Comme précédemment indiqué, chaque surface réfléchissante $S_n$, *n* étant pair, s'étend au niveau du deuxième foyer $P_{2,n-1}$ de la surface réfléchissante ellipsoïdale $S_{n-1}$ de rang précédent, ainsi qu'au niveau du premier foyer $P_{1,n+1}$ de la surface réfléchissante ellipsoïdale $S_{n+1}$ de rang suivant.

Un des avantages de l'invention est que seules les surfaces réfléchissantes de rang impair sont ellipsoïdales. Ces dernières sont ménagées sur le capot 5, et plus précisément forment la face interne $5_i$ du capot. Contrairement à la configuration décrite dans US2022/0214267, les surfaces réfléchissantes ellipsoïdales sont formées sur une seule et même pièce, destinée à être disposée face au circuit imprimé 7. Cela limite le nombre de pièces complexes à réaliser. Par ailleurs, la formation de miroirs plans sur le circuit imprimé est particulièrement simple et peu onéreuse, ce qui réduit le prix du capteur. On peut soit déposer une couche mince réfléchissante, soit disposer un miroir plan préfabriqué.

L'onde lumineuse 11 émise par la source de lumière est successivement réfléchie par les différentes surfaces réfléchissantes $S_n$, selon leurs rangs respectifs, pris dans l'ordre croissant.

Autrement dit, les surfaces réfléchissantes $S_1$... $S_N$ s'étendent successivement entre la source de lumière 10 et le photodétecteur de mesure 20. Le terme s'étendre successivement est à interpréter en considérant la propagation de la lumière entre la source de lumière 10 et le photodétecteur de mesure 20. Le trajet de l'onde lumineuse, projeté sur le socle 4 ou le capot 5, décrit un arc de cercle.

La source de lumière 10 est configurée pour émettre l'onde lumineuse d'émission 11 selon un cône de lumière $\Omega_1$, dit premier cône, s'étendant autour d'un premier axe $\Delta_1$, jusqu'à la première surface réfléchissante ellipsoïdale $S_1$. La source de lumière 10 est disposée à un sommet du premier cône de lumière $\Omega_1$. La source de lumière 10 est de préférence confondue avec le premier foyer $P_{1-1}$ de la première surface réfléchissante $S_1$.

Les termes « confondu » ou « au niveau de » sont à interpréter avec une certaine tolérance, et peuvent signifier "être situé dans le voisinage de", le voisinage correspondant à une zone s'étendant à une faible distance d'un point. Par faible distance, il est entendu une distance inférieure à 1 mm, voire inférieure à 0,5 mm.

Sur la configuration représentée sur la figure 2A, la première surface réfléchissante ellipsoïdale $S_1$ est configurée pour réfléchir le premier cône de lumière $\Omega_1$ pour former un deuxième cône de lumière $\Omega_2$, s'étendant autour d'un deuxième axe $\Delta_2$. Le deuxième cône de lumière converge vers le deuxième foyer $P_{2-1}$ de la première surface réfléchissante $S_1$, ce dernier étant situé au niveau du miroir plan $S_2$, qui forme la deuxième surface réfléchissante.

Le capteur comporte une troisième surface réfléchissante ellipsoïdale $S_3$, dont le premier foyer $P_{1,3}$ s'étend au niveau de la deuxième surface réfléchissante $S_2$. La deuxième surface réfléchissante $S_2$ est configurée pour réfléchir le deuxième cône de lumière $\Omega_2$ pour former un troisième cône de lumière $\Omega_3$, s'étendant autour d'un troisième axe $\Delta_3$. Le troisième cône de lumière $\Omega_3$ diverge jusqu'à la troisième surface réfléchissante ellipsoïdale $S_3$.

La troisième surface réfléchissante ellipsoïdale $S_3$ est configurée pour réfléchir le troisième cône de lumière $\Omega_3$ pour former un quatrième cône de lumière $\Omega_4$, s'étendant autour d'un quatrième axe $\Delta_4$. Le quatrième cône de lumière $\Omega_4$ converge vers le photodétecteur de mesure 20, ce dernier étant situé au niveau du deuxième foyer $P_{2-3}$ de la troisième réfléchissante $S_3$.

Ainsi, l'onde lumineuse 11 émise par la source de lumière 10 se propage entre les différentes surfaces réfléchissantes $S_1$... $S_N$, alternativement ellipsoïdales et plane, avant d'atteindre le photodétecteur de mesure. Dans cet exemple, $N = 3$. $N$ peut être égal à 5, ou à un autre entier impair supérieur ou égal à 3. Entre la source de lumière 10 et le photodétecteur de mesure 20, l'onde lumineuse émise par la source de lumière subit $N$ réflexions successives, c'est-à-dire autant de réflexions que de surfaces réfléchissantes s'étendant entre la source de lumière 10 et le photodétecteur de mesure 20. Cela permet de minimiser les pertes de signal lors de chaque réflexion. Entre deux surfaces réfléchissantes de rang successifs $n$, $n+1$, l'onde lumineuse 11 ne subit pas de réflexion par une autre surface réfléchissante. Les surfaces réfléchissantes de rang impair sont ellipsoïdales. La surface réfléchissante de rang 2 est un miroir plan disposé sur le circuit imprimé 7.

La figure 2B montre une configuration selon laquelle le capteur 1 comporte un photodétecteur de référence $20_{ref}$, ce dernier étant disposé sur le même circuit imprimé 7 que la source de lumière 10 et que le photodétecteur de mesure 20. Le capteur comporte une surface ellipsoïdale réfléchissante de référence $S_{ref}$, opposée au photodétecteur de référence $20_{ref}$. La surface réfléchissante de référence $S_{ref}$ comporte un premier foyer $P_{1-ref}$ et un deuxième foyer $P_{2-ref}$, les foyers étant distincts l'un de l'autre. Le premier foyer $P_{1-ref}$ de la surface réfléchissante de référence $S_{ref}$ est situé sur la surface réfléchissante $S_2$. Le deuxième foyer $P_{2-ref}$ de la surface réfléchissante de référence $S_{ref}$ est situé au niveau du photodétecteur de référence $20_{ref}$. A l'instar des surfaces réfléchissantes de rang impair, la surface réfléchissante de référence $S_{ref}$ est de préférence portée par la paroi opposée à celle portant la source de lumière, le photodétecteur de mesure 20 et le photodétecteur de référence $20_{ref}$. Sur la figure 2B, on a délimité, par des tirets mixtes, les cônes de référence $\Omega_{ref,1}$ et $\Omega_{ref,2}$ respectivement incident à la surface réfléchissante de référence $S_{ref}$ et réfléchi par cette dernière.

Sur la figure 3A, on a représenté une configuration selon laquelle le nombre $N$ de surfaces réfléchissantes est égal à 5. Sur la figure 3B, on a représenté une configuration avec 5 surfaces réfléchissantes, et une surface réfléchissante de référence qui dirige un cône de lumière de référence vers le photodétecteur de référence $20_{ref}$. Sur la figure 3B, on a délimité, par des tirets mixtes, les cônes de référence $\Omega_{ref,1}$ et $\Omega_{ref,2}$ respectivement incident à la surface réfléchissante de référence $S_{ref}$ et réfléchi par cette dernière.

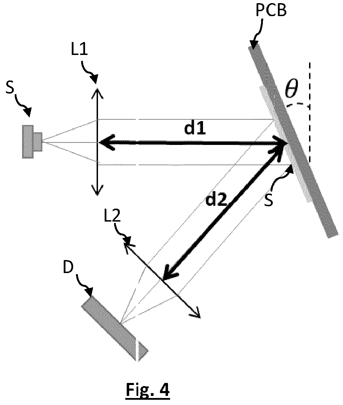

L'aptitude d'une simple couche mince, déposée sur un circuit imprimé, à réfléchir une onde lumineuse a été vérifiée expérimentalement. La figure 4 représente le dispositif expérimental mis en œuvre.

Une source de lumière L émet une lumière, de type filament, collimatée par une première lentille L1, vers une surface réfléchissante plane S. La lumière réfléchie par la couche mince est focalisée par une deuxième lentille L2 vers un photodétecteur D, de type thermopile. La surface réfléchissante était soit un miroir soit une couche d'or, déposée sur un PCB, sur une couche d'accroche de nickel de 5 $\mu$m. On a utilisé deux cartes PCB différentes : sur une première carte PCB1, l'épaisseur de la couche d'or était égale à 66 nm. Sur une deuxième couche d'accroche, l'épaisseur était de 744 nm. La lumière collectée par le détecteur a permis d'estimer la réflectivité de la surface réfléchissante, la réflectivité correspondant au pourcentage de lumière émise par la source de lumière et collectée par le photodétecteur D. L'angle θ représenté sur la figure 4 était de 30°. Les distances d1 et d2 étaient respectivement de 33.5 mm et 52.9 mm.

On a mis en œuvre deux PCB, dont les qualités de finition étaient différentes. La carte PCB1 présentait un état de surface grossier, traité de manière standard par une finition électrochimique. La deuxième carte PCB présentait un état de surface plus lisse, suite à une finition électrolytique.

Sur le PCB1, on a formé quatre miroirs identiques plans, référencés M1 à M4. Il en est de même du PCB2, sur lequel on a formé quatre miroirs identiques plans M6 à M10.

Le tableau ci-dessous montre les réflectivités respectivement déterminées pour chaque miroir plan.

Tableau 1

| Réference | Type de miroir | Réflectivité |
|---|---|---|
| PCB1 | M1 | 41 |
| | M2 | 42 |
| | M3 | 39 |
| | M4 | 38 |
| PCB2 | M6 | 62 |
| | M7 | 50 |
| | M8 | 64 |
| | M9 | 49 |
| | M10 | 46 |
| Miroir de référence | | 97 |

La dernière ligne du tableau correspond à un miroir de référence, considéré comme parfait.

On observe que l'amélioration de l'état de surface du PCB permet d'améliorer significativement la réflectivité.

L'invention pourra être appliquée pour la détection de gaz dans la surveillance de l'environnement, ou dans des applications de contrôle de gaz industriels, notamment dans l'agroalimentaire, l'industrie pétrolière, ou la distribution de gaz.

**Revendications**

1. Capteur (1) de gaz comportant une enceinte (2), configurée pour recevoir un gaz (G), le capteur comportant également :

   - une source de lumière (10), configurée pour émettre une onde lumineuse (11) se propageant dans l'enceinte en formant, à partir de la source de lumière, un premier cône de lumière ($\Omega_1$);
   - un photodétecteur de mesure (20) configuré pour détecter une onde lumineuse (14) émise par la source de lumière (10) et s'étant propagée à travers l'enceinte;
   - la source de lumière et le photodétecteur de mesure étant supportés par un circuit imprimé (7);

   - une surface réfléchissante de rang 1, formant une partie d'une ellipsoïde de révolution, présentant un premier foyer (P1-1) et un deuxième foyer (P1-2), la surface réfléchissante de rang 1 étant disposée face à la source de lumière (10), de façon à réfléchir le premier cône de lumière vers le deuxième foyer, la première surface réfléchissante formant une partie d'une ellipsoïde de révolution ;
   - où :

      • le circuit imprimé comporte un miroir plan, formant une surface réfléchissante de rang 2, le deuxième foyer de la surface réfléchissante de rang 1 étant situé sur le miroir plan ou à une distance inférieure à 1 mm de ce dernier;
      • le dispositif comporte une dernière surface réfléchissante ($S_N$) de rang N, N, étant supérieur ou égal à 3, la dernière surface réfléchissante comportant un premier foyer (P1- N), situé au niveau d'un miroir plan, disposé sur le circuit imprimé, le miroir plan formant une surface réfléchissante de rang $N$-1, la dernière surface réfléchissante comportant un deuxième foyer (P2-$N$) ;

de telle sorte que l'onde lumineuse (11) émise par la source de lumière est successivement réfléchie par les $N$ surfaces réfléchissantes, selon leurs rangs respectifs, avant de converger vers le deuxième foyer (P2-$N$) de la dernière surface réfléchissante ($S_N$), en formant un dernier cône de lumière ($\Omega_N$), le photodétecteur de mesure étant disposé de manière à s'étendre dans le dernier cône de lumière.

2. Capteur selon la revendication 1, dans lequel la source de lumière (10) est disposée au niveau du premier foyer (P1-1) de la surface réfléchissante de rang 1 ($S_1$), ou à une distance inférieure à 1 mm de ce dernier.

3. Capteur selon l'une quelconque des revendications précédentes, dans lequel le photodétecteur de mesure (20) est disposé au niveau du deuxième foyer (P2-$N$) de la dernière surface réfléchissante ($S_N$), ou à une distance inférieure à 1 mm de ce dernier.

4. Capteur selon l'une quelconque des revendications précédentes, dans lequel :

   - le dispositif comporte plusieurs surfaces réfléchissantes de rang pair, chaque surface réfléchissante de rang pair étant un miroir plan disposé sur le circuit imprimé ;
   - le dispositif comporte plusieurs surfaces réfléchissantes de rang impair, chaque surface réfléchissante de rang impair formant une partie d'une ellipsoïde de révolution et s'étendant face au circuit imprimé.

5. Capteur selon la revendication 4, dans lequel :

   - chaque surface réfléchissante de rang $n$ est configurée pour réfléchir l'onde lumineuse qu'elle reçoit en formant un cône de lumière ($\Omega_{n+1}$) de rang $n$+1, ce dernier s'étendant autour d'un axe de propagation ($\Delta_{n+1}$) de rang $n$ +1 ;
   - lorsque $n$<$N$, l'axe de propagation ($\Delta_{n+1}$) de rang $n$+1 s'étend entre la surface réfléchissante ($S_n$) de rang $n$ jusqu'à la surface ($S_{n+1}$) de rang $n$+1 ;
   - lorsque $n$ est impair, et $n \leq N$-2, chaque surface réfléchissante ($S_n$) s'étend selon une partie d'une ellipsoïde de révolution, l'axe de propagation de rang $n$+1 passant par le deuxième foyer (P2-$n$) de la surface ($S_n$) de rang $n$, ce dernier étant confondu avec le premier foyer (P1-$n$+2) de la surface ($S_{n+2}$) de rang $n$ +2 ;
   - lorsque $n$ = $N$, l'axe de propagation ($\Delta_{N+1}$) de rang $N$+1 s'étend entre la surface ($S_N$) de rang $N$ jusqu'au photodétecteur de mesure (20) ;

   de telle sorte que l'onde lumineuse émise par la source de lumière (10) subit un nombre de réflexions correspondant au nombre ($N$) de surfaces réfléchissantes avant d'atteindre le photodétecteur de mesure (20).

6. Capteur selon la revendication 5, dans lequel lorsque $n$<$N$ et $n$ est impair, chaque cône de lumière ($\Omega_{n+1}$) de rang $n$+1 converge vers le deuxième foyer (P2-$n$) de la surface ($S_n$) de rang $n$ à partir de laquelle il se propage.

7. Capteur selon l'une quelconque des revendications précédentes, dans lequel les surfaces réfléchissantes de rang impair sont ménagées sur une face interne ($5_i$) d'une même paroi (5), formant un capot du capteur.

8. Capteur selon la revendication 7, dans lequel l'enceinte (2) est formée par l'assemblage du capot (5) du capteur en dessus d'un socle (4), le circuit imprimé (7) étant disposé sur le socle.

9. Capteur selon l'une quelconque des revendications précédentes, dans lequel le ou chaque miroir plan est formé par une couche mince d'un matériau réfléchissant déposée sur le circuit imprimé.

10. Capteur selon l'une quelconque des revendications précédentes, dans lequel le nombre (N) de surfaces réfléchissantes s'étendant entre la source de lumière (10) et le photodétecteur de mesure (20) est impair.

11. Capteur selon la revendication 10, dans lequel le nombre de surfaces réfléchissantes s'étendant entre la source de lumière et le photodétecteur de mesure est égal à 3 ou à 5.

12. Capteur selon l'une quelconque des revendications précédentes, comportant un photodétecteur de référence ($20_{ref}$), configuré pour détecter une onde lumineuse considérée comme non atténuée par le gaz (G).

**13.** Capteur selon la revendication 12, comportant une surface réfléchissante de référence ($S_{ref}$), formant une ellipsoïde de révolution, la surface de référence comportant :

- un premier foyer ($P_{1\text{-}ref}$) disposé au niveau d'une surface réfléchissante plane, de rang pair, ou à une distance inférieure à 1 mm de cette dernière ;
- un deuxième foyer, ($P2\text{-}ref$) disposé au niveau du photodétecteur de référence, ou à une distance inférieure à 1 mm de ce dernier.

**14.** Procédé d'analyse d'un gaz (G) à l'aide d'un capteur (1) selon l'une quelconque des revendications précédentes, le procédé comportant les étapes suivantes :

a) introduction du gaz dans l'enceinte (2) du capteur (1);
b) illumination du gaz à l'aide de la source de lumière (10) ;
c) mesure d'une intensité lumineuse d'une onde lumineuse, émise par la source de lumière, et s'étant propagée à travers l'enceinte (2) par le photodétecteur de mesure (20) ;
d) détermination d'une quantité d'une espèce gazeuse dans le gaz ($G_x$), à partir de l'intensité lumineuse mesurée.

**15.** Procédé selon la revendication 14, dans laquelle l'étape d) est mise en œuvre par une unité de traitement (30) à partir d'un signal généré par le photodétecteur de mesure (20).

**Patentansprüche**

**1.** Gassensor (1) mit einem Gehäuse (2), das zur Aufnahme eines Gases (G) ausgelegt ist, wobei der Sensor außerdem umfasst:

- eine Lichtquelle (10), die so konfiguriert ist, dass sie eine Lichtwelle (11) aussendet, die sich in das Gehäuse ausbreitet und von der Lichtquelle aus einen ersten Lichtkegel ($\Omega_1$) bildet;
- einen Messphotodetektor (20), der so konfiguriert ist, dass er eine von der Lichtquelle (10) emittierte und sich durch das Gehäuse ausbreitende Lichtwelle (14) erfasst;
- wobei die Lichtquelle und der Messphotodetektor von einer Leiterplatte (7) getragen werden;

- eine reflektierende Fläche der Ordnung 1, die einen Teil eines Rotationsellipsoids bildet und einen ersten Brennpunkt (P1-1) und einen zweiten Brennpunkt (P1-2) aufweist, wobei die reflektierende Fläche 1. Ordnung gegenüber der Lichtquelle (10) angeordnet ist, um den ersten Lichtkegel zum zweiten Brennpunkt zu reflektieren, wobei die erste reflektierende Fläche einen Teil eines Rotationsellipsoids bildet;
- wobei:

• die gedruckte Schaltung einen Planspiegel umfasst, der eine reflektierende Fläche 2. Ordnung bildet, wobei der zweite Brennpunkt der reflektierenden Fläche 1. Ordnung auf dem Planspiegel oder in einem Abstand von weniger als 1 mm von diesem angeordnet ist;
• die Vorrichtung eine letzte reflektierende Fläche ($S_N$) der Ordnung $N$ umfasst, wobei $N$ größer oder gleich 3 ist, wobei die letzte reflektierende Fläche einen ersten Brennpunkt (P1-$N$) aufweist, der sich auf Höhe eines auf der Leiterplatte angeordneten Planspiegels befindet, wobei der Planspiegel eine reflektierende Fläche der Ordnung $N$ -1 bildet, wobei die letzte reflektierende Fläche einen zweiten Brennpunkt (P2-$N$) aufweist;

sodass die von der Lichtquelle ausgesandte Lichtwelle (11) nacheinander von den $N$ reflektierenden Flächen entsprechend ihrer jeweiligen Ordnung reflektiert wird, bevor sie zum zweiten Brennpunkt (P2-$N$) der letzten reflektierenden Fläche ($S_N$) konvergiert und einen letzten Lichtkegel ($\Omega_{(N)}$), wobei der Messphotodetektor so angeordnet ist, dass er sich in den letzten Lichtkegel erstreckt.

**2.** Sensor nach Anspruch 1, wobei die Lichtquelle (10) am ersten Brennpunkt (P1-1) der reflektierenden Fläche der Ordnung 1 ($S_1$) oder in einem Abstand von weniger als 1 mm davon angeordnet ist.

**3.** Sensor nach einem der vorstehenden Ansprüche, wobei der Messphotodetektor (20) am zweiten Brennpunkt (*P2-N*) der letzten reflektierenden Fläche ($S_N$) oder in einem Abstand von weniger als 1 mm davon angeordnet ist.

4.  Sensor nach einem der vorstehenden Ansprüche, wobei:

    - die Vorrichtung mehrere reflektierende Flächen mit gerader Ordnung umfasst, wobei jede reflektierende Fläche mit gerader Ordnung ein auf der Leiterplatte angeordneter Planspiegel ist;
    - die Vorrichtung mehrere reflektierende Flächen ungerader Ordnung umfasst, wobei jede reflektierende Fläche ungerader Ordnung einen Teil eines Rotationsellipsoids bildet und sich gegenüber der Leiterplatte erstreckt.

5.  Sensor nach Anspruch 4, wobei:

    - jede reflektierende Fläche der Ordnung $n$ so konfiguriert ist, dass sie die von ihr empfangene Lichtwelle reflektiert, indem sie einen Lichtkegel ($\Omega_{n+1}$) der Ordnung n+1 bildet, der sich um eine Ausbreitungsachse ($\Delta_{n+1}$) der Ordnung n+1 erstreckt;
    - wenn $n<N$, erstreckt sich die Ausbreitungsachse ($\Delta_{n+1}$) der Ordnung n+1 zwischen der reflektierenden Fläche ($S_n$) der Ordnung $n$ bis zur Fläche ($S_{n+1}$) der Ordnung n+1;
    - wenn $n$ ungerade ist und $n \leq N-2$, erstreckt sich jede reflektierende Fläche ($S_n$) entlang eines Teils eines Rotationsellipsoids, wobei die Ausbreitungsachse der Ordnung $n$ +1 durch den zweiten Brennpunkt (P2- $n$) der Fläche ($S_n$) der Ordnung $n$, wobei letzterer mit dem ersten Brennpunkt (P1- $n+2$) der Fläche ($S_{n+2}$) der Ordnung $n$ +2 zusammenfällt;
    - wenn $n$ = N, erstreckt sich die Ausbreitungsachse ($\Delta_{N+1}$) der Ordnung N+1 zwischen der Fläche ($S_N$) der Ordnung $N$ bis zum Messphotodetektor (20);

    sodass die von der Lichtquelle (10) emittierte Lichtwelle eine Anzahl von Reflexionen entsprechend der Anzahl ($N$) der reflektierenden Flächen durchläuft, bevor sie den Messphotodetektor (20) erreicht.

6.  Sensor nach Anspruch 5, wobei, wenn $n<N$ und $n$ ungerade ist, jeder Lichtkegel ($\Omega_{n+1}$) der Ordnung n+1 zum zweiten Brennpunkt (P2-n) der Fläche ($S_n$) der Ordnung $n$ konvergiert, von dem aus er sich ausbreitet.

7.  Sensor gemäß einem der vorstehenden Ansprüche, wobei die ungeraden reflektierenden Flächen auf einer Innenseite ($5_i$) derselben Wand (5) angeordnet sind, die eine Abdeckung des Sensors bildet.

8.  Sensor gemäß Anspruch 7, wobei das Gehäuse (2) durch die Montage der Abdeckung (5) des Sensors auf einem Sockel (4) gebildet wird, wobei die Leiterplatte (7) auf dem Sockel angeordnet ist.

9.  Sensor nach einem der vorstehenden Ansprüche, wobei der oder jeder Planspiegel durch eine dünne Schicht aus einem reflektierenden Material gebildet wird, die auf der Leiterplatte aufgebracht ist.

10. Sensor nach einem der vorstehenden Ansprüche, wobei die Anzahl (N) der zwischen der Lichtquelle (10) und dem Messphotodetektor (20) verlaufenden reflektierenden Flächen ungerade ist.

11. Sensor nach Anspruch 10, wobei die Anzahl der reflektierenden Flächen, die sich zwischen der Lichtquelle und dem Messphotodetektor erstrecken, gleich 3 oder 5 ist.

12. Sensor nach einem der vorstehenden Ansprüche, mit einem Referenz-Fotodetektor ($20_{ref}$), der so konfiguriert ist, dass er eine Lichtwelle erfasst, die als durch das Gas (G) ungedämpft betrachtet wird.

13. Sensor gemäß Anspruch 12, mit einer Referenzreflexionsfläche ($S_{ref}$), die ein Rotationsellipsoid bildet, wobei die Referenzfläche umfasst:

    - einen ersten Brennpunkt ($P_{1 \text{-ref}}$), der auf einer ebenen, geradzahligen reflektierenden Fläche oder in einem Abstand von weniger als 1 mm davon angeordnet ist;
    - einen zweiten Brennpunkt (P2 - ref), der auf Höhe des Referenzfotodetektors oder in einem Abstand von weniger als 1 mm von diesem angeordnet ist.

14. Verfahren zur Analyse eines Gases (G) mit Hilfe eines Sensors (1) gemäß einem der vorstehenden Ansprüche, wobei das Verfahren die folgenden Schritte umfasst:

    a) Einleiten des Gases in das Gehäuse (2) des Sensors (1);
    b) Beleuchten des Gases mit Hilfe der Lichtquelle (10);

c) Messen einer Lichtintensität einer von der Lichtquelle emittierten und sich durch das Gehäuse (2) ausbreitenden Lichtwelle durch den Messphotodetektor (20);
d) Bestimmung einer Menge einer Gasart im Gas ($G_x$) anhand der gemessenen Lichtintensität.

**15.** Verfahren nach Anspruch 14, wobei Schritt d) von einer Verarbeitungseinheit (30) anhand eines vom Messphotodetektor (20) erzeugten Signals durchgeführt wird.

**Claims**

**1.** Gas sensor (1) comprising an enclosure (2) configured to receive a gas (G), the sensor also comprising:

- a light source (10) configured to emit a light wave (11) propagating in the enclosure, forming a first light cone ($\Omega_1$) from the light source;
- a measuring photodetector (20) configured to detect a light wave (14) emitted by the light source (10) and propagated through the enclosure;
- the light source and the measuring photodetector being supported by a printed circuit board (7);

- a first-order reflective surface forming part of a revolving ellipsoid, having a first focal point (P1-1) and a second focal point (P1-2), the first-order reflective surface being disposed opposite the light source (10) so as to reflect the first light cone toward the second focal point, the first reflective surface forming part of a revolving ellipsoid;
- wherein:

• the printed circuit board comprises a flat mirror, forming a reflective surface of rank 2, the second focal point of the reflective surface of rank 1 being located on the flat mirror or at a distance of less than 1 mm therefrom;
• the device comprises a final reflective surface ($S_N$) of rank $N$, $N$ being greater than or equal to 3, the final reflective surface comprising a first focal point ($P1-N$), located at the level of a flat mirror, arranged on the printed circuit board, the flat mirror forming a reflective surface of rank $N$-1, the final reflective surface comprising a second focal point ($P2-N$);

such that the light wave (11) emitted by the light source is successively reflected by the $N$ reflective surfaces, according to their respective ranks, before converging towards the second focal point ($P2-N$) of the last reflective surface ($S_N$), forming a last light cone ($\Omega_N$), the measuring photodetector being arranged so as to extend into the last light cone.

**2.** Sensor according to claim 1, wherein the light source (10) is arranged at the first focal point (P1-1) of the reflective surface of rank 1 ($S_1$), or at a distance of less than 1 mm therefrom.

**3.** Sensor according to any of the preceding claims, wherein the measuring photodetector (20) is arranged at the second focal point ($P2-N$) of the last reflective surface ($S_N$), or at a distance of less than 1 mm therefrom.

**4.** Sensor according to any of the preceding claims, wherein:

- the device comprises a plurality of reflective surfaces of even rank, each reflective surface of even rank being a plane mirror arranged on the printed circuit board;
- the device comprises a plurality of odd-ranked reflective surfaces, each odd-ranked reflective surface forming part of a revolution ellipsoid and extending facing the printed circuit board.

**5.** Sensor according to claim 4, wherein:

- each reflective surface of rank $n$ is configured to reflect the light wave it receives by forming a light cone ($\Omega_{n+1}$) of rank n+1, the latter extending around a propagation axis ($\Delta_{n+1}$) of rank n+1;
- when $n<;N$, the propagation axis ($\Delta_{n+1}$) of rank n+1 extends between the reflective surface ($S_n$) of rank $n$ and the surface ($S_{n(+1)}$) of rank n+1;
- when $n$ is odd, and $n \leq N$-2, each reflective surface ($S_n$) extends along part of a revolving ellipsoid, with the propagation axis of rank $n$+1 passing through the second focal point (P2-$n$) of the surface ($S_n$) of rank $n$, the latter being confused with the first focal point (P1- $n$+ 2) of the surface ($S_{n+2}$) of rank n + 2;
- when $n = N$, the propagation axis ($\Delta_{N+1}$) of rank N+1 extends between the surface ($S_N$) of rank $N$ and the photodetector (20);

such that the light wave emitted by the light source (10) undergoes a number of reflections corresponding to the number ($N$) of reflective surfaces before reaching the measuring photodetector (20).

6.  Sensor according to claim 5, wherein when $n$ <$N$ and $n$ is odd, each light cone ($\Omega_{n+1}$) of rank n+1 converges towards the second focal point ($P2$-$n$) of the surface ($S_n$) of rank $n$ from which it propagates.

7.  Sensor according to any of the preceding claims, wherein the odd-ranked reflective surfaces are provided on an inner face ($5_i$) of a single wall (5), forming a cover for the sensor.

8.  Sensor according to claim 7, wherein the enclosure (2) is formed by assembling the sensor cover (5) on top of a base (4), the printed circuit board (7) being arranged on the base.

9.  Sensor according to any of the preceding claims, wherein the or each plane mirror is formed by a thin layer of a reflective material deposited on the printed circuit board.

10. Sensor according to any of the preceding claims, wherein the number ($N$) of reflective surfaces extending between the light source (10) and the measuring photodetector (20) is odd.

11. Sensor according to claim 10, wherein the number of reflective surfaces extending between the light source and the measuring photodetector is equal to 3 or 5.

12. Sensor according to any of the preceding claims, comprising a reference photodetector ($20_{ref}$), configured to detect a light wave considered to be unattenuated by the gas (G).

13. Sensor according to claim 12, comprising a reference reflective surface ($S_{ref}$) forming a revolution ellipsoid, the reference surface comprising:

    - a first focal point ($P_{1-ref}$) located at a plane reflective surface of even rank, or at a distance of less than 1 mm from the latter;
    - a second focal point (P2 - ref) located at the reference photodetector or at a distance of less than 1 mm from the latter.

14. Method for analysing a gas (G) using a sensor (1) according to any of the preceding claims, the method comprising the following steps:

    a) introducing the gas into the chamber (2) of the sensor (1);
    b) illuminating the gas using the light source (10);
    c) measuring a light intensity of a light wave emitted by the light source and propagated through the enclosure (2) by the measuring photodetector (20);
    d) determining a quantity of a gaseous species in the gas ($G_x$) from the measured light intensity.

15. Method according to claim 14, wherein step d) is carried out by a processing unit (30) from a signal generated by the measuring photodetector (20).

**Fig. 1A**

**Fig. 1B**

**Fig. 2A**

**Fig. 2B**

**Fig. 3A**

**Fig. 3B**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026992 A
- WO 2007064370 A
- EP 2711687 A
- EP 2891876 A
- FR 3022999 A1
- US 20220214267 A